# EUROPEAN PATENT APPLICATION

(11) **EP 1 758 189 A1**
(43) Date of publication of application: **28.02.2007**
(21) Application number: 05741361.9
(22) Date of filing: 23.05.2005
(51) Int. Cl.: H01M 8/04, H01M 8/00, H01M 8/06

(54) **FUEL CELL SYSTEM**

(30) Priority: 28.05.2004 JP 2004159574
(71) Applicant: Nokia Corporation, 02150 Espoo (FI)
(72) Inventor: HASHIZUME, Kenichi, kitagunma-gun, Gunma 3703600 (JP); NAKADE, Shogo, 1440000 (JP)
(74) Representative: van Walstijn, Bartholomeus G. G.
(86) International application number: PCT/JP2005/009319
(87) International publication number: WO 2005/117182

(57) **Abstract**

The invention is directed to developing a technique to estimate the remaining time for generating electrical power, which is applicable to small fuel cells used as a power supply in small electronic devices such as mobile phones or portable computers. In a fuel cell system comprising a fuel cell, a fuel used directly or indirectly for the fuel cell, and a module with internal electrical or physical properties that change as the fuel is used, the present invention is **characterized by** a method for estimating the remaining time in which the fuel or hydrogen created from the fuel can be provided to the fuel cell, where providing a plurality of electrodes inside the module, measuring electrical or physical properties of the space between at least two of said electrodes, and estimating the remaining time based on the measurement results.

## Description

### [Technical field]

The invention relates to a fuel cell system, and in particular, a technique to estimate the remaining time that the fuel cell system can generate electrical power.

### [Background art]

A fuel cell is a means of generating electrical power via a chemical reaction of hydrogen or methanol. Although fuel cells are referred to as cells, they may also be referred to as power generators. The features of fuel cells are: light environmental load because no carbon dioxide is generated through the burning of gases and oils; and great power generating efficiency due to the chemical energy of fuel being directly converted to electrical energy. Therefore, more expectations have been placed on fuel cells as an energy source for the next generation.

Currently, portable fuel cell systems can be broadly classified into two types: hydrogen driven and direct methanol. In hydrogen driven fuel cells, hydrogen is directly supplied to a cation-exchange membrane to generate electrical power. In contrast, in direct methanol fuel cells, electricity is directly obtained through a dehydrogenating hydrogen oxidation reaction of methanol. In hydrogen driven fuel cells, there are well-known methods for directly storing the hydrogen to be carried as direct fuel in a tank, with hydrogen being obtained from such carried forms as hydrogen storage alloy, water, and methanol. In Japanese Patent Laid-Open No. 2003-221201, a technique is disclosed for generating hydrogen by reacting water and a metal alloy. Additionally, in Japanese Patent Laid-Open No. 2003-306301, a technique is disclosed for obtaining hydrogen from dehydrogenative oxidation of an aromatic compound with a catalyst.

A user needs to know how much longer a fuel cell will generate power, no matter the kind of portable fuel cell. Without this knowledge, it becomes inconvenient as an electronic apparatus using the fuel cell as a power source will suddenly stop when the battery is exhausted. When a fuel cell is of a type that is placed on the ground and is continuously supplied with fuel such as city gas, the abovementioned items are not particularly problems. Also, when the fuel cell is relatively large such that it is used as the power source for a car, a method for estimating the remaining time in which the fuel cell can generate electrical power, by installing a fuel indicator or a gas pressure sensor in the fuel tank to measure the remaining fuel may be considered. However, when a fuel cell is used as a power source for a portable or compact electronic apparatus, since the fuel cell itself is required to be compact and inexpensive, it may be inappropriate to install a fuel indicator or a pressure sensor therein. Consequently, in conventional fuel cells for a portable electric apparatus, a method in which the remaining fuel is checked, for example, with the eyes through a window attached on the fuel storage for estimating the remaining time in which the fuel cell can generate electrical power.

### [Disclosure of the invention]

The present invention is directed to developing a technology to estimate the remaining time for generating electrical power, which is applicable even to small fuel cells used as a power supply in small electronic devices such as mobile phones or portable computers.

When viewed from one aspect of the present invention, in a fuel cell system comprising a fuel cell, a fuel used directly or indirectly for the fuel cell, and a module with internal electrical or physical properties that change as the fuel is used, the present invention is characterized by a method for estimating the remaining time in which the fuel or hydrogen created from the fuel can be provided to the fuel cell, where the method providing a plurality of electrodes inside the module, measuring electrical or physical properties of the space between at least two of said electrodes, and estimating the remaining time based on the measurement results.

When the present invention is viewed from another aspect, in a fuel cell system comprising a fuel cell, a fuel used directly or indirectly for the fuel cell, and a module with internal electrical or physical properties that change as the fuel is used, the present invention is characterized by a method for alerting the user when the remaining time in which the fuel or hydrogen created from the fuel can be provided to the fuel cell is low, where the method providing a plurality of electrodes inside the module, measuring electrical or physical properties of the space between at least two of said electrodes, and alerting the user when the measurement results are larger or smaller than a threshold.

The abovementioned electrical properties may be one or more of resistance, capacitance, inductance, and impedance. Additionally, the abovementioned physical properties may be one or more of magnetic susceptibility, expansion coefficient, and morphology.

In one embodiment of the present invention, if the abovementioned fuel cell system creates hydrogen by a chemical reaction between the abovementioned fuel and a catalyst for the reaction, the fuel cell system may be configured to arrange at least two of the plurality of electrodes so that the abovementioned catalyst is located in between the two electrodes, in order to measure variations in electrical or physical properties of the space between the abovementioned electrodes caused by the chemical change in the catalyst. Additionally, in another embodiment of the present invention, if the abovementioned fuel cell system comprises a fuel storage for storing the abovementioned fuel and provides the fuel to the fuel cell directly or after a reformulation, the fuel cell system may be configured to arrange at least two of the plurality of electrodes in the fuel storage so that the fuel can be located between the two electrodes to measure variations in electrical or physical properties, which depend on the amount of fuel remaining between the two electrodes. Moreover, in yet another embodiment of the present invention, if the abovementioned fuel cell system comprises a casing for storing the abovementioned fuel and a catalyst for reformulating the fuel, the abovementioned electrodes may be located in the casing.

When the present invention is further viewed from another aspect, the present invention is characterized by a fuel cell system comprising a power outlet for providing electrical power for an external device, a fuel used directly or indirectly for the fuel cell, a module whose internal electrical or physical properties change as the abovementioned fuel is used, two electrodes installed in the module for measuring electrical properties of the space between the two electrodes, and two probe-contacts, each of them being in contact with each of the abovementioned two electrodes electrically, for providing electrical contact with the two electrodes. The abovementioned electrical properties may be one or more of resistance, capacitance, inductance, and impedance. Additionally, the abovementioned physical properties may be one or more of magnetic susceptibility, expansion coefficient, and morphology.

In one embodiment of the present invention, the abovementioned probe-contacts may be provided on the abovementioned housing of the module. And, in some embodiments, the abovementioned power outlets and the abovementioned probe-contacts are provided on the housing of the abovementioned fuel cell system. Furthermore, in some embodiments, the abovementioned power outlets and the abovementioned probe-contacts form part of the connector.

In one embodiment of the present invention, the abovementioned fuel cell system is characterized by comprising a hydrogen generator for obtaining hydrogen from fuel used for the fuel cell system, wherein the abovementioned two electrodes are installed in the hydrogen generator. In this case, the abovementioned hydrogen generator may further comprise a fuel inlet for receiving the abovementioned fuel from another part of the abovementioned fuel cell system, and a hydrogen outlet for exhausting hydrogen generated by the abovementioned chemical reaction to another part of the fuel cell system.

In one embodiment of the present invention, the abovementioned hydrogen generator comprises a catalyst for generating hydrogen from the fuel through a chemical reaction. In this case, the abovementioned catalyst is preferably installed in between the abovementioned two electrodes. In this embodiment, one of the abovementioned two electrodes may comprise a part of the outer wall of one side of the hydrogen generator, and the other of the abovementioned two electrodes may comprise a part of the outer wall of the other side of the hydrogen generator, and an insulator-layer in between the one side and the other side of the outer wall. The inside surface of the outer wall of the abovementioned hydrogen generator may be coated by an insulator-layer. At least one of the abovementioned two electrodes may comprise an insulator-layer on the surface thereof. The abovementioned insulator-layer may be composed of at least one of the following materials: paper, a polyolefin such as polyethylene or polypropylene, a polyester such as polyethylene terephthalate, an aromatic or aliphatic polyamide, a polyurethane, a polyimide, a phenol resin, a liquid crystalline polymer, PPS, an epoxy resin, PEEK, or PES. Furthermore, in this embodiment, the abovementioned hydrogen generator comprises a support member for supporting the abovementioned catalyst for the reaction. The support member may be composed of one of the following materials: metal, carbon, conductive polymer, and conductive ceramic. Additionally, the support member may have the shape of a net, lattice, or perforations. Moreover, the member is conductive, and is used as one of said two electrodes. Furthermore, in one embodiment of the present invention, one part of the abovementioned catalyst is mounted on the abovementioned support member so that one part faces the support member and does not face the abovementioned fuel, and the abovementioned other part of the catalyst is mounted on the abovementioned support member so that the other part directly contacts with the abovementioned fuel. Additionally, in one embodiment, the abovementioned catalyst is installed in a removable manner in the abovementioned hydrogen generator.

In one embodiment of the present invention, the abovementioned hydrogen generator comprises a catalyst to accelerate a hydrogen generating reaction in which the hydrogen is created by a change in the fuel itself. One of the abovementioned two electrodes may comprise a part of an outer wall of the abovementioned hydrogen generator. One of the two electrodes comprises a part of an outer wall of one side of the abovementioned hydrogen generator, and the other of the abovementioned two electrodes comprises a part of an outer wall of the other side of the abovementioned hydrogen generator, and an insulator-layer is formed in between the one side and the other side of the abovementioned outer wall. At least one of the abovementioned two electrodes comprises an insulator-layer on the surface thereof, and the insulator-layer is composed of at least one of the following materials: paper, a polyolefin such as polyethylene or polypropylene, a polyester such as polyethylene terephthalate, an aromatic or aliphatic polyamide, a polyurethane, a polyimide, a phenol resin, a liquid crystalline polymer, PPS, an epoxy resin, PEEK, and PES. Furthermore, in some embodiments, the abovementioned catalyst has the shape of a lattice and/or is perforated. Additionally, the abovementioned hydrogen generator is attached in a removable manner to another part of the hydrogen generator fuel cell system.

In one embodiment of the present invention, the abovementioned fuel cell system may comprise a casing for storing the fuel to be used for the system, wherein said plurality of electrodes are installed in the casing. Also, in this case, one of the abovementioned two electrodes comprises a part of an outer wall of the abovementioned casing. Furthermore, one of the abovementioned two electrodes comprises a part of an outer wall of one side of the abovementioned casing, and the other of the abovementioned two electrodes comprises a part of an outer wall of the other side of the abovementioned casing, and an insulator-layer is formed in between the one side and the other side of the abovementioned outer wall. If at least one of the abovementioned two electrodes comprises an insulator-layer on the surface thereof, the insulator-layer is composed of at least one of the following materials: paper, a polyolefin such as polyethylene or polypropylene, a polyester such as polyethylene terephthalate, an aromatic or aliphatic polyamide, a polyurethane, polyimide, a phenol resin, a liquid crystalline polymer, PPS, an epoxy resin, PEEK, and PES. Moreover, in the embodiments, the abovementioned casing comprises a holding material to hold the abovementioned fuel in, and a support member to support the holding material. In this case, the abovementioned support member preferably has the shape of a net, lattice, or is perforated. Furthermore, the abovementioned support member is conductive, which is preferably used as one of the abovementioned two electrodes. The abovementioned casing may be attached in a removable manner to another part of the abovementioned fuel cell.

In one embodiment of the present invention, the fuel cell system according to the present invention is portable.

When the present invention is viewed from another aspect, the present invention includes a device comprising main probe-contacts for electrically connecting with said probe-contacts, used together with a fuel cell system by the present invention disclosed above, and a power inlet for electrically connecting with said power outlets. In one embodiment, the abovementioned power inlets and the abovementioned main probe-contacts may be included in a connector.

When the present invention is viewed from another aspect, the present invention comprises a device comprising a measuring instrument for connecting to the abovementioned probe-contacts, used together with a fuel cell system by the present invention disclosed above, and measuring electrical and/or physical properties in between the two electrodes, and an estimator for estimating the remaining time in which the fuel cell can produce electrical power, based on the measurement results. Furthermore, when the present invention is viewed from another aspect, the present invention comprises a fuel cell system by the present invention disclosed above, a measuring instrument for connecting to the abovementioned probe-contacts and measuring electrical and/or physical properties in between the abovementioned two electrodes, and an estimator for estimating the remaining time in which the fuel cell can produce electrical power based on the measurement results. In one embodiment, the abovementioned estimator may be configured to produce an alert for the user if the apparatus estimates that the remaining time in which the fuel cell can produce electrical power is short. And the abovementioned estimator may be configured to shut down the apparatus if the apparatus estimates that the remaining time in which the fuel cell can produce electrical power is short. Moreover, in one embodiment, the apparatus by the present invention is portable, and in particular, a mobile phone.

The present invention can make it possible to estimate the remaining time in which the fuel cell can produce electrical power, regarding small fuel cells, used as the power supply in small electronic apparatus such as mobile phones or portable computers, as well as large fuel cells.

### [Most preferable embodiments for implementing the invention]

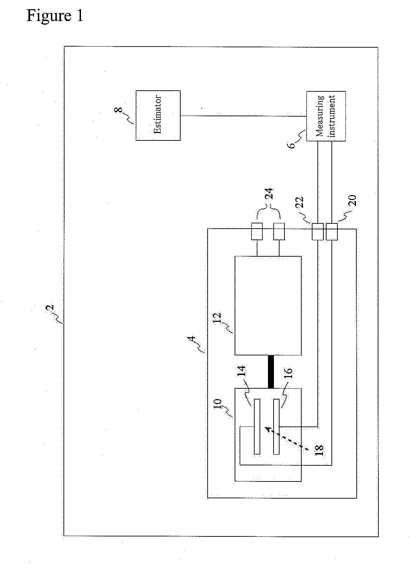

The embodiments for carrying out the invention are described with reference to the attached drawings below. Fig. 1 is an outline of the fuel cell system according to the invention. A fuel cell system 2 according to the invention comprises a fuel cell 4, a measuring instrument 6 and an estimator 8. The fuel cell 4 comprises an electrode installation section 10 and a fuel cell 12. The electrode installation section 10 comprises an electrode 14 and an electrode 16, and also stores various fuel and catalysts depending on the type of the fuel cell 4, and the electrodes 14 and 16 are placed such that the fuel and the catalysts exist in a space 18 between these electrodes. Each of the electrodes 14 and 16 are electrically connected by probe-contacts 20, 22 on the housing of the fuel cell 12. The fuel cell 12 is the section to producing electrical power from a chemical reaction, which may obtain electrical power from the binding reaction of hydrogen and oxygen or may obtain electrical power through the oxidation reaction of methanol. The produced electrical power is supplied to the whole fuel cell system 2 from power outlet 24 provided on the housing of the fuel cell 4. The measuring instrument 6 is connected with the electrodes 14, 16 through the probe-contacts 20, 22, which comprises the estimator to for estimate estimating electrical properties such as resistance, capacitance and impedance between these electrodes. Estimator 8 controls the estimator 6, causing the estimator 6 to measure electrical properties between the electrodes 14 and 16. As the fuel cell 4 continues producing electrical power, the amount of fuel, chemical properties of the fuel or chemical properties of the catalyst are changed existing in the interval space 18 between the electrode 14 and 16 are changed. Therefore, as the fuel cell 4 continues producing electrical power, the electric resistance, capacitance and dielectric constant in the space 18 are changed. If a measuring instrument such as a resistance meter or impedance measuring equipment is connected to the probe-contacts 20, 22 to measure electric resistance, capacitance and impedance between the electrodes 14 and 16 over time, the change in electrical properties/physical properties in the space 18 arising from the continuing electrical generation can be captured. The estimator 8 controls the measuring instrument 6 in the taking of measurements over time and receives the measurement values from the measuring instrument 6 over time. Further, the estimator 8 estimates, from the change in the received measurement values, the remaining time for supplying fuel or hydrogen produced by the fuel to the fuel cell 12. This remaining time directly relates to the remaining time for producing electrical power of the fuel cell 4, which means the estimator 8 estimates the time for producing electrical power for the fuel cell 4.

What is changed by continuing electrical generation depends on the type of fuel cell. The electrodes mentioned above are preferably installed in a place where they can capture changes most easily, according to the type of fuel cell. For example, in the case of fuel cells in which hydrogen is obtained by reacting water and a catalyst (catalytic metal) and electrical power is produced by reacting hydrogen and oxygen, the electrodes can even be installed where the catalyst is installed because the catalyst is oxidized with time and the electric and physical properties are changed. Additionally, in direct methanol fuel cells, the electrodes should be installed in the fuel storage because methanol is reduced over time. More specific embodiments of a fuel cell in which the invention is applied are described below, with the preferred electrode structure.

How accurately the estimator 8 can estimate the remaining time to produce electrical power in a fuel cell depends on what is changed by continuing electrical generation, as well as the shape of the electrodes, structure and installation method. However, at least when the measurement values received from the measuring instrument 6 are larger than a threshold or smaller than a predetermined threshold, the estimator 8 can estimate that the remaining time for producing electrical power is short. If the remaining time for producing electrical power is short, the fuel cell system 2 is preferably configured to alert the user of the fuel cell system 2 accordingly and to shut down the power of the fuel cell system 2.

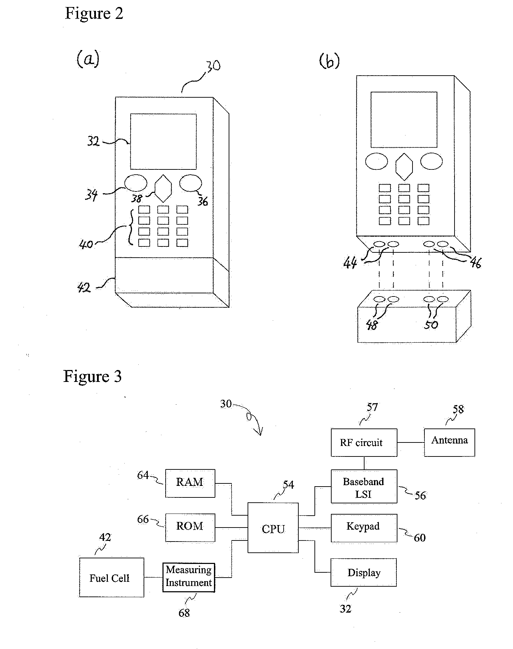

Fig. 2 is an embodiment in which the fuel cell system according to the invention is applied to a mobile phone. Fig. 2 shows a mobile phone using the fuel cell system according to the invention. Mobile phone 30 comprises display 32, on-hook key 34, off-hook key 36, function keys 38, number keys 40 and fuel cell 42. The fuel cell 42 is similar to the fuel cell 4 in Fig. 1. As shown in Fig. 2 (b), the fuel cell 42 can be separated from the main body of the mobile phone 30. The contact surface of the fuel cell 42 with the main body of the mobile phone 30 comprises the power outlets 48 (equivalent to the power outlets of the fuel cell 4 in Fig. 1) for providing electrical power produced by the fuel cell 42 to the main body of the mobile phone 30, and the probe-contacts 50, equivalent to the probe-contacts 20, 22 of the fuel cell 4 in Fig. 1. In other words, the probe-contacts 50 provide electrical contact with the electrodes installed in the inside of the fuel cell 42, which is equivalent to the electrodes 14, 16 of the fuel cell 4 in Fig. 1. And the contact surface of the main body of the mobile phone 30 comprises the power inlets 44 receiving electrical power from the power outlets 48 of the fuel cell 42, and the main probe-contacts 46, which are electrically connected to the probe-contacts 50. The mobile phone 30 estimates a the remaining time to for produce producing electrical power of the fuel cell 42 by measuring electrical properties between electrodes equivalent to the electrodes 14, 16 of the fuel cell 4 in Fig. 1, which is are installed in the inside of the fuel cell 42, through the main probe-contacts and the probe-contacts 50 of the fuel cell 42.

Additionally, in Fig. 2, the power outlets 48 and the probe-contacts 50 are provided on the housing of the fuel cell 42, and can be provided in one connector. Furthermore, the main body of the mobile phone 30 may comprise the connector, gathering together the power inlet 44 and the main probe-contacts 46. From the above, standardization of the connector connecting the fuel cell and the electronic apparatus, which comprises the power outlets and the probe-contacts, including its configuration, has a cost advantage as well as the configuration.

Fig. 3 is an outline of the hardware structure of the mobile phone 30. The mobile phone 30 comprises a CPU 54, which connects to a baseband LSI 56, a keypad 60, a display 32, a RAM 64 and a ROM 66. The baseband LSI 56 is connected to an RF circuit 57, and furthermore the RF circuit 57 is connected to an antenna 58. The keypad 60 includes an on-hook key 34, an off-hook key 36, function keys 38 and number keys 40, as shown in Fig. 2. In the ROM 66, are stored programs in which the CPU 54 controls functions of the mobile phone 30.

Furthermore, the CPU 54 connects to a measuring instrument 68, which is equivalent to the measuring instrument 6 in Fig. 1. The measuring instrument 68 is electrically connected to the fuel cell 42 through the main probe-contacts 46 and the probe-contacts 50 on the fuel cell, as shown in Fig. 2. According to the programs stored in the ROM 66, the CPU 54 makes the measuring instrument 68 to check electrical properties (resistance, capacitance, etc.) over time between the electrodes, equivalent to the electrodes 14, 16 in Fig. 1, which are installed in the inside of the fuel cell 42 over time, and receives the measurement values. Additionally, according to the programs stored in the ROM 66, the CPU 54 estimates the remaining time for producing electrical power of the fuel cell 42 from the measurement values. The results of the estimate are shown on the display 32 and presented to the user of the mobile phone 30. Furthermore, according to the programs stored in the ROM 66, if the measurement values are larger than a threshold (or smaller), the CPU 54 disables specific functions of the mobile phone 30 or shuts down the power of the mobile phone 30. Thus, the estimator 8 works according to the CPU 54 and the programs stored in the ROM 66.

Next, more specific embodiments of the fuel cell to which the invention is applied are described, with preferable configurations, in the following embodiments.

### [Example 1]

Example 1 illustrates an example of applying the invention to fuel cells in which hydrogen is obtained by the reaction of a hydrogen supply body such as methanol or water with a catalyst and then generating electricity by a reaction of the obtained hydrogen with oxygen. In this type of fuel cell, the catalyst itself is oxidized by a chemical reaction with the hydrogen supply body. Wherein, a "metal catalyst" is used in Japanese Patent Laid-Open No. 2003-221201 referenced in the section, Background of the Art.

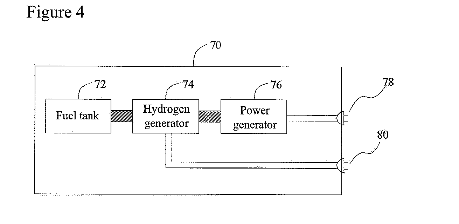

Fig. 4 is an outline of the fuel cell system applying the invention in the example. A fuel cell 70 comprises a fuel tank 72, a hydrogen generator 74, a power generator 76, a power outlet 78, and a probe-contact 80. Fuel such as water or alcohol is stored in the fuel tank 72. The hydrogen generator 74 comprises a catalyst to generate hydrogen in a chemical reaction between the fuel supplied from the fuel tank and the catalyst. To capture the chemical change in the catalyst undergoing this chemical reaction, electrodes corresponding to the electrode 14 and 16 in Fig. 1 are installed in the hydrogen generator 74. The probe-contact 80 supplies an electrical contact with these electrodes, and corresponds to the probe-contacts 20, 22 in Fig. 1. The power generator 76 comprises a fuel cell that generates electricity by a chemical reaction of hydrogen supplied from the hydrogen generator 74 with externally taken oxygen. Generated electricity is supplied externally from the power outlet 78. The power outlet 78 corresponds to the power outlet 24 in Fig. 1.

The catalyst used in the example is required for generating hydrogen in a chemical reaction with a hydrogen supply body such as water or alcohol. For example, metalic catalysts include nickel and its alloys, iron and its alloys, vanadium and its alloys, manganese and its alloys, titanium and its alloys, copper and its alloys, silver and its alloys, calcium and its alloys, zinc and its alloy, zirconium and its alloys, cobalt and its alloys, chrome and its alloys, aluminium and its alloys, and so on. Aluminum generates hydrogen by reacting with water at high temperatures, and aluminum itself becomes aluminum oxide. Taking into consideration safety and ease of control, it is preferable to use zinc and its alloys or transition materials of zinc and its alloys. That is, it is preferable to use nickel, iron, vanadium, manganese, titanium, copper, silver, zirconium, cobalt, chrome and their respective alloys. The surface area of the catalyst can be expanded by being installed in the hydrogen generator 74 in granular form.

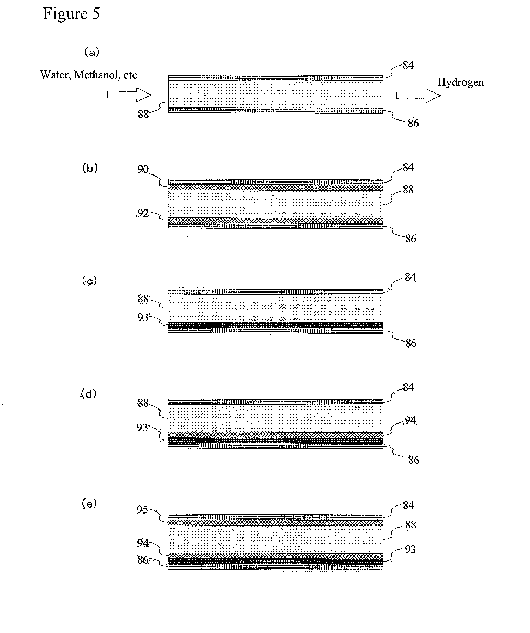

Fig. 5 is a drawing showing the installation mode of the electrode and the catalyst which are installed in the hydrogen generator 74. Fig. 5 (a) shows the simplest embodiment, wherein electrodes 84 and 86 are installed such that the catalyst 88 is placed between them. It shows that, when fuel such as water or alcohol enters from the left side of the drawing, a chemical reaction with the catalyst 88 results, upon which hydrogen is generated and emitted from the right side of the drawing. As the reaction continues, the electric resistance of the catalyst 88 is increased due to the catalyst 88 being oxidized in this chemical reaction. Such changes in electrical properties can be measured by connecting a resistance meter or impedance measuring equipment to the electrodes 84, 86. Probe-contacts 80 in Fig. 4 provide electrical contact between electrodes 84, 86 and the exterior of the fuel cell 70.

In the embodiment shown in Fig. 5 (b), insulator-layers 90, 92 are installed between the electrodes 84, 86 and the catalyst 88. Thin paper, nonwoven fabric, macromolecule film, and on the like can be used as an insulator. In addition, the oxidized catalyst also acts as an insulator-layer. Said insulator-layer prevents unnecessary chemical reaction with the fuel and contributes to the stability of the hydrogen generator 74.

In the embodiment shown in Fig. 5 (c), a support member 93 supporting the catalyst 88 is installed between the electrode 86 and the catalyst 88. Since the support member 93 decreases unnecessary movement of the catalyst 88, the electrical properties between electrodes 84, 86 may be measured more stably. Stabilizing the catalyst 88 is particularly important when the fuel cell is carried and used. An organic or inorganic binder or a method such as a sintering can be used to bond the catalyst 88 to the support member 93. A conductive material such as metal, carbon, conductive polymer, conductive ceramics, may be used for the support member 93. Naturally, a nonconductive material may also be used. Furthermore, the support member 93 may be formed such that it has a sponge-like or a fabric-like structure, an activated carbon-like structure, or a perforation structure in order to expand its surface area. When the support member 93 has conductivity, it can also be used instead of the electrode 86.

In the embodiment shown in Fig. 5 (d), an insulator-layer 94 is installed between the support member 93 and the catalyst 88 to avoid unnecessary interaction between the support member 93 and the catalyst 88. For the insulator-layer 94, it is preferable to use a material that is stable under high temperatures such as polyimide resin, PPS, epoxy resin, PEEK, or metal oxide.

In the embodiment shown in Fig. 5 (e), an insulator-layer 95 is further installed between the catalyst 88 and the electrode 84. The same materials as for the insulator-layer 94 can be used for the insulator-layer 95. In such an embodiment, there is an advantage in that the corrosion resistance of the electrode can be improved.

The electrodes 84 and 86 are installed to measure electrical properties such as the resistance and the capacitance between the electrodes using measuring equipment which is electrically connected through the probe-contact 80. A resistance meter or impedance measuring equipment can be used as the measuring equipment. The electrodes 84, 86 can take various shapes such as mesh or wire in addition to the sheet shape shown in Fig. 5, and an embodiment such that the support member 93 serves as the electrode 84 or 86 may be considered.

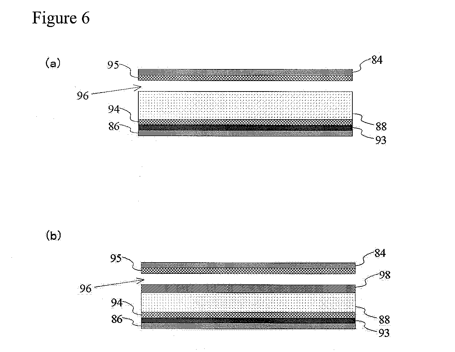

In the embodiment shown in Fig. 6 (a), a gap 96 is provided between the catalyst 88 and the insulator-layer 95 so that fuel flows into the gap 96. The surface opposite the surface facing the gap 96 of the catalyst 88 is attached such that it contacts the insulator-layer 94 of the support member 93 but does not contact the fuel. In such an embodiment, since it is considered that a portion of the catalyst 88 that is oxidized by the chemical reaction of the catalyst 88 and fuel is formed laminarly from the surface facing the gap 96 as indicated in reference number 98, modest changes in the capacitance between the electrodes resulting from the progress of the chemical reaction can be expected, and therefore, the remaining time in which the fuel cell 70 can generate electrical power can easily be estimated.

In the embodiment in which a gap is provided between the catalyst and electrode as shown in Fig. 6 (a), capacitance is suitable as the electrical property to be measured between the electrodes. Assuming that an alloy catalyst with a thickness of 10 micrometers is sandwiched between two of the electrodes with a gap of 1 micrometer, the capacitance in the initial state is on the order 10 pF. If the catalyst is oxidized for 5 micrometers and the dielectric constant of the oxidized catalyst is around 5, the capacitance at that time will be 5 pF.

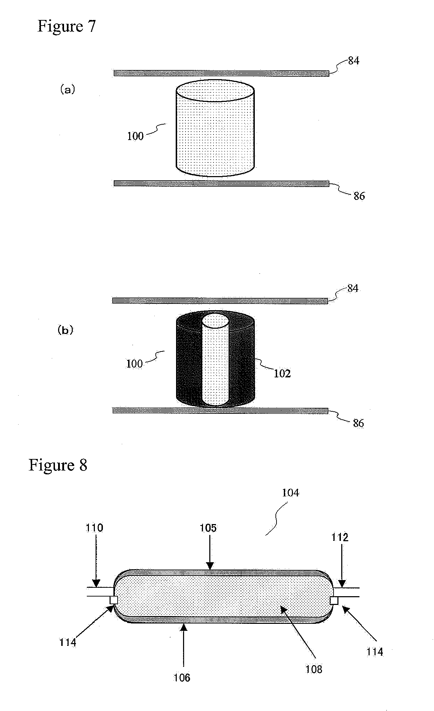

Fig. 7 (a) is an example of resistance being measured as the electrical property between the electrodes. A conductive catalyst 100 is sandwiched between the electrode 84 and the electrode 86. Although the catalyst 100 may be of the same material as the catalyst 88, it is preferable that the shape of the catalyst 100 be cylindrical as shown in Fig. 7 (a) or granular. In the initial state, the resistance between the electrode 84 and the electrode 86 is minimal. For example, a cylinder having a radius of 10 nm and a height of 1 mm has a resistance on the order of 1 mega-ohm. However, as the hydrogen generation reaction between the catalyst and fuel progresses, the catalyst is oxidized from its surface, and the cross-sectional area of the conductive portion gradually decreases. Therefore, as the hydrogen generation reaction progresses, the resistance between the electrode 84 and the electrode 86 gradually increases. The actual rate of increase of the resistance depends on the material used and the shape of the catalyst and electrode.

Fig. 8 is one example of an embodiment of the hydrogen generator 74. The hydrogen generator 104 in the example comprises an upper housing 104 and a lower housing 105, with a catalyst stored inside. An electrode corresponding to the electrode 84 shown in Fig. 5 is installed in the upper housing 104, while an electrode corresponding to the electrode 86 is installed in the lower housing 105. The upper housing 104 and the lower housing 105 are insulated with a gasket 114. Furthermore, the hydrogen generator 104 comprises a fuel inlet 110 for receiving fuel that is reacted with the catalyst 108 and a hydrogen outlet 112 for exhausting hydrogen. The inner surface of the upper housing 104 and lower housing 105 may be provided with an insulator-layer. An electrode (not shown) installed in the upper housing 104 and lower housing 105 is electrically connected to the probe-contact 80 (Fig. 4), respectively.

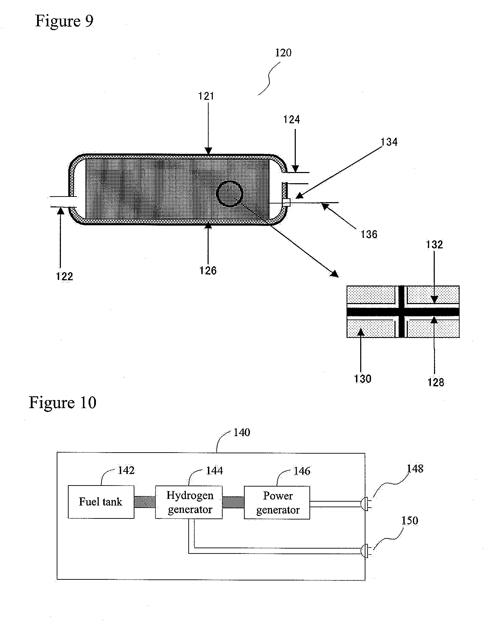

Fig. 9 is another example of the hydrogen generator 74. The hydrogen generator 120 in the example comprises a metal housing 121 covering entire hydrogen generator 120, a fuel inlet 122, and a hydrogen outlet 124 both shown in Fig. 8. The metal housing 121 serves as the electrode 84 shown in Fig. 5. The inner surface of the metal housing is covered by an insulator-layer 126 corresponding to the insulator-layer 95 in Fig. 5. In addition, a support member 128 formed with metal mesh is installed inside the housing, and a catalyst 130 is maintained within the mesh of the support member 128. The support member 128 serves as both the support member 93 shown in Fig. 5 and the electrode 86 shown in Fig. 5. The surface of the support member 128 is covered by an insulator-layer 132. A gasket 134 is provided in the housing 121, and a conductive wire 136 which is electrically connected to the support member 128 extends to the outside of the housing 121 through the gasket 134. The electrical contact between the support member 128 and the outside can be secured with this conductive wire 136. The conductive wire 136 is connected to the probe-contact 80 (Fig. 4), and similarly, the metal housing 121 also has electrical contact with the probe-contact 80 (Fig. 4).

As shown in the example, when the catalyst is maintained with a net support member, the change in the resistance and capacitance caused by the movement of the catalyst inside the hydrogen generator 120 at the time of carrying can be restrained, and thus, the change in the resistance and capacitance caused by oxidation of the catalyst 130 can be detected more accurately. Therefore, such an embodiment may be advantageous when the fuel cell according to the invention is used as the power of a portable electronic apparatus which is always carried and used.

However, since the type of fuel cell described in Example 1 cannot be used because the catalyst is oxidized as hydrogen generation reaction continues, it is preferable that the catalyst be configured to be replaceable. It may be configured such that only the catalyst is replaceable in the hydrogen generator shown in Fig. 4, or the fuel cell 70 may be configured so that all of the hydrogen generator 74 is replaceable. Naturally, it is necessarily configured to be able to refill with fuel.

### [Example 2]

Example 2 illustrates an example of applying the invention to the type of fuel cell in which hydrogen is obtained by decomposing fuel which is a hydrogen supply body with a catalyst. The catalyst used in this type of fuel cell is different from the catalyst in the type of fuel cell described in Example 1 in that the catalyst itself is not changed in the hydrogen generation reaction. Hexane and its derivatives, decane and its derivatives, and so on can be used as fuels which are a hydrogen supply body. These fuels generate hydrogen via a chemical reaction which is accelerated by a catalyst. Such catalysts may be composed of materials such as nickel, palladium, platinum, rhodium, ruthenium, molybdenum, rhenium, tungsten, vanadium, osmium, chrome, cobalt, and iron.

Fig. 10 is an outline of such a fuel cell system. A fuel cell 140 comprises a fuel tank 142, a hydrogen generator 144, a power generator 146, a power outlet 148, and a probe-contact 150. Fuel such as hexane or decane is stored in the fuel tank 142. The hydrogen generator 144 comprises a catalyst made of the abovementioned materials, and is filled with fuel supplied from the fuel tank. Under conditions such as the temperature becoming sufficiently high, the reaction generates hydrogen from the fuel by the action of the catalyst, and the generated hydrogen is supplied to the generator 146. As the hydrogen generation reaction continues, since oxidized fuel is increased in the hydrogen generator 144, the dielectric constant of the liquid existing in the hydrogen generator 144 is changed. To detect this change, electrodes corresponding to the electrodes 14, 16 in Fig. 1 are installed in the hydrogen generator 144. The probe-contact 150 provides electrical contact with these electrodes, and corresponds to the probe-contacts 20, 22 in Fig. 1. By connecting a resistance meter, impedance measuring equipment, and on the like to the probe-contact 150 to measure resistance, capacitance, etc. in the hydrogen generator, the remaining time in which the fuel cell 140 can generate electrical power can be estimated.

The power generator 146 comprises a cell that generates electricity via a chemical reaction of hydrogen supplied from the hydrogen generator 144 and oxygen obtained externally. Generated electricity is supplied externally from the power outlet 148. The power outlet 148 corresponds to the power outlet 24 in Fig. 1.

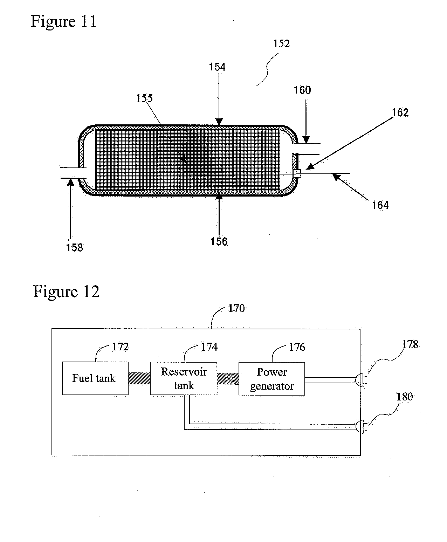

The electrodes installed in the hydrogen generator 144 are installed such that fuel is present between them. The surface of the electrodes may be formed with an insulator-layer. In addition, the catalyst may be one side of the electrode, or the housing of the hydrogen generator 144 may be a part of the electrode. Fig. 11 is one example of the hydrogen generator 144. The hydrogen generator 152 in the example comprises a metal housing 154 covering the entire hydrogen generator 152, a fuel inlet 158, and a hydrogen outlet 160. The inner surface of the metal housing 154 is covered by an insulator-layer 156. Furthermore, a mesh-shaped metal catalyst 155 is installed inside the metal housing. The metal housing 154 and the metal catalyst 155 serve as the electrode 14, 16 in Fig. 1, respectively. The housing 154 is provided with a gasket 162, and conductive wire 164 which is electrically connected to the metal catalyst 155 extends outside the housing 154 through the gasket 162. Electrical contact between the metal catalyst 155 and the outside can be secured with this conductive wire 164.

### [Example 3]

Example 3 illustrates an example of applying the invention to direct methanol fuel cells. Since this type of fuel cell obtains electricity by decomposing methanol with the fuel electrode of a power generator 176, a hydrogen generator is not required unlike the type of fuel cell described in Example 1 and Example 2. When the invention is applied to this type of fuel cell, electrodes may be installed so that the increase in resistance and decrease in capacitance caused by the decrease in the remaining amount of methanol fuel can be measured.

Fig. 12 is an outline of such a fuel cell system. A fuel cell 170 comprises a fuel tank 172, a reservoir tank 174, a power generator 176, a power outlet 178, and a probe-contact 180. The fuel tank 172 is a replaceable cartridge type and methanol fuel is stored therein. The reservoir tank 174 receives methanol from the fuel tank 172 to temporarily store and then supply it to the power generator 176. In direct methanol fuel cells, since methanol is consumed while generating power, methanol in the reservoir tank 174 decreases gradually after the methanol to be stored in the fuel tank 172 is completely consumed. Since the dielectric constant of methanol is large compared to air, the capacitance of the reservoir tank 174 decreases when methanol decreases. To detect this change, electrodes corresponding to the electrodes 14, 16 in Fig. 1 are installed in the reservoir tank 174 by sandwiching fuel between them. The probe-contact 180 provides electrical contact with these electrodes, corresponding to the probe-contacts 20, 22 in Fig. 1. By connecting a measuring instrument corresponding to the measuring instrument 6 in Fig. 1 to the probe-contact 180 to measure the capacitance between the electrodes installed in the reservoir tank 174, the remaining time in which the fuel cell 170 can generate electrical power can be estimated. Electricity generated by the power generator 176 is supplied externally from the power outlet 178. The power outlet 178 corresponds to the power outlet 24 in Fig. 1.

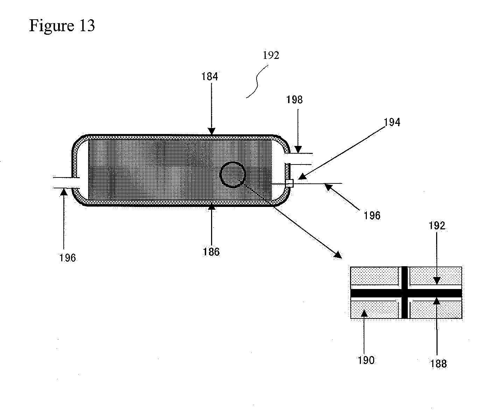

Fig. 13 is one example of the reservoir tank 174. The reservoir tank 192 comprises a metal housing 184 covering the entire reservoir tank 192, a fuel inlet 196, and a hydrogen outlet 198. The inner surface of the metal housing 184 is covered with an insulator-layer 186. Furthermore, a mesh-shaped conductive support member 188 is installed inside the housing. The fuel holding material 190 is supported in the net of the support member 188. The surface of the support member 188 is insulated by an insulator-layer 192. The housing 184 and the support member 188 serve as the electrodes 14, 16 in Fig. 1, respectively. The housing 184 is provided with a gasket 194, and conductive wire 196 which is electrically connected to the support member 188 extends outside the housing 184 through the gasket 194. Electrical contact between the support member 188 and the outside can be secured with this conductive wire 196. Since the fuel holding material 190 is used to hold fuel inside, porous material such as a sponge is preferable. Since methanol is absorbed in the fuel holding material 190, it can prevent methanol from shaking in the reservoir tank 192, and therefore, measuring electrical properties in the reservoir tank 192 with the housing 184 and the support member 188 can be performed stably. Therefore, such an embodiment may be advantageous when the fuel cell according to the invention is used as a power source of a portable electronic apparatus which is always carried and used.

Although examples of the present invention have been described above, the above description is illustrative only, and does not limit the embodiment of the invention. For example, electrodes corresponding to the electrode 14 and 16 may be installed in the fuel tank rather than the hydrogen generating part or the reservoir tank. As described above, the present invention can take various modes without departing from the scope of the present invention.

### [Brief Description of the Drawings]

Fig. 1 is an outline of the fuel cell system according to the invention.
Fig. 2 is an example in which the fuel cell system according to the invention is applied to a mobile phone.
Fig. 3 is a drawing explaining the hardware configuration of a mobile phone in Fig. 2.
Fig. 4 is an outline of the fuel cell system to which the invention is applied. (Example 1)
Fig. 5 is a drawing explaining an installation mode of an electrode and a catalyst. (Example 1)
Fig. 6 is a drawing explaining another installation mode of an electrode and a catalyst. (Example 1)
Fig. 7 is a drawing explaining still another installation mode of an electrode and a catalyst. (Example 1)
Fig. 8 is a drawing explaining an installation mode of an electrode and a catalyst. (Example 1)
Fig. 9 is a drawing explaining an installation mode of an electrode and a catalyst. (Example 1)
Fig. 10 is an outline of the fuel cell system to which the invention is applied. (Example 2)
Fig. 11 is a drawing explaining an installation mode of an electrode and a catalyst. (Example 2)
Fig. 12 is an outline of the fuel cell system to which the invention is applied. (Example 3)
Fig. 13 is a drawing explaining an installation mode of an electrode and a catalyst. (Example 3)

## Claims

1. For a fuel cell system comprising a fuel cell, a fuel used directly or indirectly for the fuel cell, and a module whose internal electrical or physical properties change as fuel is used, a method for estimating a remaining time in which fuel or hydrogen created from the fuel can be provided to the fuel cell, the method comprising the steps of:
- providing a plurality of electrodes inside of the module,
- measuring an electrical or a physical property of a space between at least two of said electrodes,
- estimating the remaining time based on a result of the measuring.

2. For a fuel cell system comprising a fuel cell, a fuel used directly or indirectly for the fuel cell, and a module whose internal electrical or physical properties change as the fuel is used, a method for alerting when a remaining time in which fuel or hydrogen created from the fuel can be provided to the fuel cell becomes low, the method **characterized by** comprising the steps of:
- providing a plurality of electrodes inside of the module,
- measuring an electrical or a physical property of a space between at least two of said electrodes,
- alerting when a result of the measuring is larger or smaller than a threshold.

3. A method according to claim 1 or 2, wherein the electrical property is one or more of a resistance, capacitance, inductance, and impedance.

4. A method according to any of claim 1-3, wherein, the fuel cell system creates hydrogen by a chemical reaction of the fuel and a catalyst for the reaction, the method further comprising
- arranging at least two of the plurality of electrodes so that the catalyst is located in between the two electrode, and
- measuring a variation of an electrical or a physical property of a space between the electrodes caused by a chemical change of the catalyst.

5. A method according to any of claim 1-3, wherein, the fuel cell system comprises a fuel storage for storing the fuel and providing the fuel to the fuel cell directly or after a reformulation, the method further comprising:
- arranging at least two of the plurality of electrodes in the fuel storage so that the fuel can be located in between the two electrodes, and
- measuring a variation of an electrical or a physical property which depends on an amount of fuel remaining between the two electrodes

6. A method according to any of claim 1-3, wherein, the fuel cell system comprises a casing for storing the fuel and a catalyst for reforming the fuel, the method **characterized by** locating the electrodes in the casing.

7. A fuel cell system comprising:
- a power outlet for providing electrical power for an external device,
- a fuel used directly or indirectly for the fuel cell,
- a module whose internal electrical or physical property being changed as fuel is used,
- two electrodes installed in the module, for measuring an electrical property of a space between the two electrodes, and,
- two probe-contacts, each of them being contacted with each of the two electrodes electrically, for providing electrical contact with the two electrodes.

8. A system according to claim 7, wherein the electrical property is one or more of a resistance, capacitance, inductance, and impedance.

9. A system according to claim 7 or 8, wherein the probe-contacts are provided on a housing of the module.

10. A system according to claim 7 or 8, wherein the power outlet and the probe-contacts are provided on a housing of the fuel cell system.

11. A system according to claim 10, wherein the power outlet and the probe-contacts form part of a connector.

12. A system according to any of claim 7-11 comprising a hydrogen generator for obtaining a hydrogen from fuel used for the fuel cell system, wherein the two electrodes are installed in the hydrogen generator.

13. A system according to claim 12, wherein the hydrogen generator further comprises:
- a fuel inlet for receiving the fuel from another part of the fuel cell system, and
- a hydrogen outlet for exhausting hydrogen generated by the chemical reaction to another part of the fuel cell system.

14. A system according to claim 12 or 13 comprising a catalyst for generating hydrogen from the fuel through a chemical reaction.

15. A system according to claim 14, wherein the catalyst is installed in between the two electrodes.

16. A system according to claim 14 or 15, wherein one of the two electrodes is comprised by a part of an outer wall of the hydrogen generator.

17. A system according to any of claim 14-16, wherein one of the two electrodes is comprised by a part of an outer wall of one side of the hydrogen generator, and the other of the two electrodes is comprised by a part of an outer wall of the other side of the hydrogen generator, and comprising an insulator-layer in between the one side and the other side of the outer wall.

18. A system according to any of claim 14-17, wherein the inside surface of the outer wall is coated by an insulator-layer.

19. A system according to any of claim 14-18, wherein at least one of the two electrodes comprises an insulator-layer on the surface thereof.

20. A system according to claim 19, wherein the insulator-layer is comprised by at least one of the paper, polyolefin such as polyethylene or polypropylene, polyester such as polyethylene terephthalate, aromatic or aliphatic polyamide, polyurethane, polyimide, phenol resin, liquid crystalline polymer, PPS, epoxy resin, PEEK, and PES.

21. A system according to any of claim 14-20, wherein the hydrogen generator comprising a support member for supporting the catalyst for the reaction.

22. A system according to claim 20, wherein the support member is comprised by one of the metal, carbon, conductive polymer, and conductive ceramics.

23. A system according to claim 20 or 21, wherein the support member has a shape of net, lattice, or porousness.

24. A system according to any of claim 21-23, wherein the member is conductive, and is used as one of said two electrodes.

25. A system according to any of claim 21-24, wherein one part of the catalyst is mounted on the support member so that the one part faces to the support member and does not face the fuel, and the other part of the catalyst is mounted on the support member so that the other part directly contacts with the fuel.

26. A system according to any of claim 14-25, wherein the catalyst is installed removably in the hydrogen generator.

27. A system according to claim 12 or 13 wherein the hydrogen generator comprising a catalyst to accelerate a hydrogen generating reaction in which the hydrogen is created by the change of the fuel itself.

28. A system according to claim 27, wherein one of the two electrodes is comprised by a part of an outer wall of the hydrogen generator.

29. A system according to claim 27 and 28, wherein one of the two electrodes is comprised by a part of an outer wall of one side of the hydrogen generator, and the other of the two electrodes is comprised by a part of an outer wall of the other side of the hydrogen generator, and comprising an insulator-layer in between the one side and the other side of the outer wall.

30. A system according to any of claim 27-29, wherein at least one of the two electrodes comprises an insulator-layer on the surface thereof.

31. A system according to claim 30, wherein the insulator-layer is comprised by at least one of the paper, polyolefin such as polyethylene or polypropylene, polyester such as polyethylene terephthalate, aromatic or aliphatic polyamide, polyurethane, polyimide, phenol resin, liquid crystalline polymer, PPS, epoxy resin, PEEK, and PES.

32. A system according to any of claim 27-31, wherein the catalyst has a shape of lattice and/or is porous.

33. A system according to any of claim 27-32, wherein the catalyst is attached removably to another part of the fuel cell system.

34. A system according to any of claim 7-11 comprising a casing for storing a fuel to be used for the system, wherein said plurality of electrodes are installed in the casing.

35. A system according to claim 32, wherein one of the two electrodes is comprised by a part of an outer wall of the casing.

36. A system according to claim 34 or 35, wherein one of the two electrodes is comprised by a part of an outer wall of one side of the casing, and the other of the two electrodes is comprised by a part of an outer wall of the other side of the casing, and comprising an insulator-layer in between the one side and the other side of the outer wall.

37. A system according to any of claim 34-36, wherein at least one of the two electrodes comprises an insulator-layer on the surface thereof.

38. A system according to claim 37, wherein the insulator-layer is comprised by at least one of the paper, polyolefm such as polyethylene or polypropylene, polyester such as polyethylene terephthalate, aromatic or aliphatic polyamide, polyurethane, polyimide, phenol resin, liquid crystalline polymer, PPS, epoxy resin, PEEK, and PES.

39. A system according to any of claim 34-38, wherein the casing comprises a holding material to hold the fuel in, and a support member to support the holding material.

40. A system according to claim 39, wherein the support member has a shape of net, lattice, or is porous.

41. A system according to claim 39 or 40, wherein the member is conductive, and is used as one of said two electrodes.

42. A system according to any of claim 34-41, wherein the casing is attached removably to another part of the fuel cell system.

43. A system according to any of claim 7-42, wherein the fuel cell system is portable.

44. An electronic apparatus used together with a fuel cell system according to any of claims 7-43, the device comprising main probe contacts for electrically connecting with said probe-contacts, and a power inlet for electrically connecting with said power outlet.

45. An electronic apparatus according to claim 44, wherein the power inlet and the main prove contacts is prepared in a connector.

46. An electronic apparatus used together with a fuel cell system according to any of claims 7-43, the device comprising a measuring instrument for connecting to the prove contacts and measuring an electrical and/or a physical property in between the two electrodes, and an estimator for estimating a remaining time in which the fuel cell can produce an electric power based on a result of the measurement.

47. An electronic apparatus comprising a fuel cell system according to any of claims 7-43, a measuring instrument for connecting to the prove contacts and measuring an electrical and/or a physical property in between the two electrodes, and an estimator for estimating a remaining time in which the fuel cell can produce an electric power based on a result of the measurement.

48. An electronic apparatus according to claim 46 or 47, wherein the estimator makes an alert to a user if the apparatus estimates that a remaining time in which the fuel cell can produce an electric power is small.

49. An electronic apparatus according to any of claims 46-48, wherein the estimator shut down the apparatus if the apparatus estimates that a remaining time in which the fuel cell can produce an electric power is small.

50. An electronic apparatus according to any of claims 45-49, wherein the apparatus is portable.

51. An electronic apparatus according to claim 50, wherein the apparatus is a mobile phone.
